# EUROPÄISCHE PATENTSCHRIFT

(11) **EP 2 524 724 B1**
(45) Veröffentlichungstag und Bekanntmachung des Hinweises auf die Patenterteilung: **14.10.2015**
(21) Anmeldenummer: 12002863.4
(22) Anmeldetag: 24.04.2012
(51) Int. Cl.: B01D 29/11, B01D 29/90

(54) **Filter**
Filter
Filtre

(30) Priorität: 17.05.2011 DE 102011101787
(43) Veröffentlichungstag der Anmeldung: 21.11.2012
(73) Patentinhaber: Robert Bosch GmbH, 70469 Stuttgart (DE)
(72) Erfinder: Hausdorf, Jürgen, 67166 Otterstadt (DE)
(74) Vertreter: Thürer, Andreas

(56) Entgegenhaltungen:
- WO-A1-02/076568
- BE-A- 507 078
- DE-A1- 19 519 352
- US-A- 1 822 006
- US-A- 5 316 677

## Beschreibung

Die Erfindung betrifft einen Filter, insbesondere einen Hydraulikfilter, gemäß dem Oberbegriff des Patentanspruchs 1.

Die Druckschrift FR 2 693 662 offenbart einen derartigen Filter. Dieser hat ein topfförmiges Filtergehäuse, in das ein etwa hohlzylindrisches Filterelement eingesetzt ist. Das Filtergehäuse ist von einem Kopfteil verschlossen, wobei das Filterelement zwischen einem Gehäuseboden und dem Kopfteil fixiert ist. In dem Kopfteil sind ein Zulauf- und ein Ablaufkanal ausgebildet. Der Zulaufkanal mündet in Filterlängsrichtung in einem vom Filtergehäuse und Filterelement begrenzten Ringraum. Der Ablaufkanal erstreckt sich koaxial zum Filterelement, von dessen Innenraum aus. Das zu filternde Fluid strömt dabei vom Zulaufkanal über das Filterelement in dessen Innenraum und von da aus zum Ablaufkanal. Das Kopfteil hat einen in das topfförmige Filtergehäuse eingetauchten Zylinderabschnitt, der vom Ablaufkanal durchsetzt ist. Ein Durchmesser des Zylinderabschnitts entspricht etwa dem Durchmesser des Filterelements. Der Zylinderabschnitt des Kopfteils wird von einem Umlenkblech umgriffen zum Umlenken der Fluidströmung. Das Fluid strömt dabei axial in dem vom Filterelement und dem Zylinderabschnitt des Kopfteils begrenzten Ringraum und wird dann vom Umlenkblech in radialer Richtung umgelenkt. Nachteilig bei dieser Lösung ist, dass ein derartiger Filter einen großen Bauraum bedarf und zur Umlenkung der Fluidströmung ein zusätzliches vorrichtungstechnisch aufwendiges Umlenkblech erforderlich ist.

Des Weiteren sind im Stand der Technik Filter bekannt, bei denen ein Zulauf radial zum Filterelement angeordnet ist. Um das Filterelement dabei vor Beschädigungen durch Strömungskräfte zu schützen, hat dieses im Anströmbereich einen perforierten Schutzmantel. Dieser führt nachteilig zu einem höheren Strömungswiderstand und zu einem vorrichtungstechnisch hohen Herstellungsaufwand des Filters.

Filter mit tangentialem Einlauf sind der BE 507078 und der US 1,822,006 zu entnehmen.

Demgegenüber liegt der Erfindung die Aufgabe zugrunde, einen Filter zu schaffen, der vorrichtungstechnisch einfach und kompakt aufgebaut ist.

Diese Aufgabe wird gelöst durch einen Filter nach den Merkmalen des Patentanspruchs 1.

Erfindungsgemäß hat ein Filter, insbesondere ein Hydraulikfilter ein Filtergehäuse, in dem ein etwa zylindrisches, insbesondere hohlzylindrisches, Filterelement angeordnet ist. Der Filter dient zum Abscheiden von Partikeln aus einem Mittel, insbesondere aus einem Fluid oder einem Druckmittel. In dem Filtergehäuse ist ein Ringraum von einer Außenmantelfläche des Filterelements und einer Innenmantelfläche des Filtergehäuses begrenzt. Ein Zulaufkanal für das zu filternde Mittel ist mit dem Ringraum verbunden, während ein Ablaufkanal sich von einem Innenbereich, insbesondere von einer Innenwandung des Filterelements begrenzten Bereich, aus erstreckt. Der Zulaufkanal ist dabei vorteilhafterweise derart ausgestaltet, dass ein in den Ringraum einströmendes Mittel etwa in Umfangsrichtung des Ringraums einströmt.

Diese Lösung hat den Vorteil, dass eine Strömungsrichtung nicht direkt auf das Filterelement gerichtet ist, wodurch dieses im Vergleich zum Stand der Technik äußerst geringen Strömungskräften ausgesetzt ist. Dies hat zur Folge, dass das Filterelement nicht mit zusätzlichen Bauteilen geschützt werden muss. Da des Weiteren der Zulaufkanal nicht axial, wie im Stand der Technik, ausgebildet ist, ist eine äußerst kompakte Ausbildung des Filters möglich, insbesondere in Längsrichtung gesehen. Somit wird das Filterelement 4 nicht direkt angeströmt, sondern wird durch einen formgebundenen Prallschutz dahingehend geschützt, dass keine zusätzlichen Teile zum Schutz des Filterelements 4 notwendig sind und das Fluid tangential am Filterelement 4 vorbei strömt.

Mit Vorteil hat der Ringraum eine kreisringförmige Querschnittsfläche, wobei der Zulaufkanal dann etwa tangential zur Außenmantelfläche des Filterelements angeordnet ist. Dies hat den Vorteil, dass das zu filternde Mittel in etwa entlang eines Kreisumfangs strömt, und hierdurch einen großen Bereich des Filterelements umströmt.

Vorzugsweise hat der Zulaufkanal im Querschnitt - senkrecht zur Filterlängsachseeinen sich zum Ringraum verjüngenden Endabschnitt. Dessen geringste Breite kann dabei etwa der Breite des Ringraums im Querschnitt gesehen entsprechen. Das zu filternde Mittel strömt somit im Wesentlichen in den Ringraum ein und etwa tangential am Filterelement vorbei.

Der Endabschnitt des Zulaufkanals kann zusätzlich nutartig bzw. langlochartig ausgebildet sein und sich dabei etwa parallel zur Filterlängsachse erstrecken. Dies führt dazu, dass das einströmende Mittel über einen breiten Bereich in Längsrichtung gesehen in den Ringraum einströmt. Des Weiteren kann hierdurch eine Beschleunigung des Mittels aufgrund der im Querschnitt sich verjüngenden Ausgestaltung des Endabschnitts kompensiert werden.

Der nutartige oder verbreiterte Endabschnitt ist dabei derart ausgestaltet, dass das zu filternde Mittel in eine axiale Richtung gelenkt ist. Hierdurch kann sich eine zyklonartige Strömung des Mittels ausbilden, wodurch sich dieses äußerst vorteilhaft um große Bereiche des Filterelements herum verteilt.

In weiterer Ausgestaltung der Erfindung ist das Filtergehäuse topfartig ausgebildet, wobei das Filterelement vollständig in das Filtergehäuse eingetaucht ist.

Der Zulauf- und Ablaufkanal ist mit Vorteil einstückig mit dem Filtergehäuse ausgebildet, womit dieser kostengünstig beispielsweise mit einem Guss- oder einem Spritzgussverfahren herstellbar ist.

Um das Filtergehäuse auf einfache Weise an einem anderen Bauteil zu befestigen, hat dieses einen Gehäuseflansch, in dem ein mit dem Zulaufkanal verbundener Zulaufanschluss und ein mit dem Ablaufkanal verbundener Ablaufanschluss ausgebildet sind.

Der Zulaufanschluss ist in Filterlängsrichtung gesehen dabei auf Höhe des Filterelements ausgebildet, wodurch der Zulaufkanal sich vorteilhafter Weise entlang einer Ebene quer zur Filterlängsrichtung erstrecken kann.

Zur Verringerung der Strömungsgeschwindigkeit des Mittels kann der Zulaufkanal zwischen seinem Endabschnitt und dem Zulaufanschluss kegelstumpfförmig ausgebildet sein, wobei er sich dabei in Strömungsrichtung verbreitert.

Der Ablaufkanal erstreckt sich bevorzugter Weise etwa koaxial zum Filterelement von einem Bodenbereich des Filtergehäuses aus und verläuft dann etwa bogenförmig zum Gehäuseflansch.

Sonstige vorteilhafte Ausgestaltungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 eine Längsschnittansicht eines Filters gemäß einem Ausführungsbeispiel;
Figur 2 eine Querschnittsansicht des Filters aus Figur 1; und
Figur 3 eine Querschnittsansicht des Filters aus Figur 1.

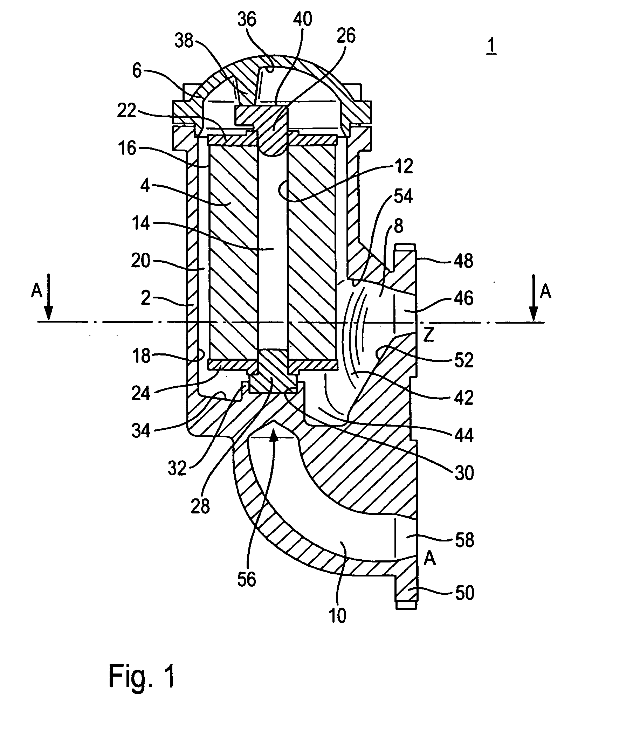

Figur 1 zeigt in einer Längsschnittansicht in einer vereinfachten Darstellung einen erfindungsgemäßen Filter 1. Hierbei handelt es sich um einen Industriefilter zur Filterung insbesondere von Hydraulik- und Schmieröl. Der Filter 1 kann beispielsweise unmittelbar stromabwärts einer Hydropumpe angeordnet sein, wobei er dann einen gesamten Druckmittelvolumenstrom filtert (Hauptstromfilter). Ein weiteres Einsatzgebiet derartiger Filter 1 kann in einem hydraulischen Teilkreislauf stromaufwärts einer empfindlichen hydraulischen Vorrichtung sein.

Der Filter 1 hat ein topfförmiges Filtergehäuse 2, in das ein hohlzylindrisches Filterelement 4 etwa koaxial zum Filtergehäuse 2 vollständig eingesetzt ist. Über ein kuppelförmiges Kopfteil 6 ist das Filtergehäuse 2 verschlossen. Des Weiteren ist in dem Filtergehäuse 2 einstückig mit diesem ein Zulaufkanal 8 und ein Ablaufkanal 10 ausgebildet.

Das Filterelement 4 hat einen etwa kreisringförmigen Querschnitt und begrenzt mit seiner Innenmantelfläche 12 einen Innenraum 14. Mit seiner Außenmantelfläche 16 begrenzt das Filterelement 4 zusammen mit einer Innenmantelfläche 18 des Filtergehäuses 2 einen etwa einen kreisringförmigen Querschnitt aufweisenden Ringraum 20. Eine jeweilige Stirnseite des Filterelements 4 ist mit einem ringförmigen Halteblech 22, 24 verschlossen. Das jeweilige Halteblech 22, 24 umgreift dabei das Filterelement 4 mit einem Halterand.

Das Filterelement 4 ist über zwei Haltezapfen 26, 28 zwischen dem Filtergehäuse 2 und dem Kopfteil 6 gehaltert. Die Haltezapfen 26, 28 weisen dabei eine Stufe mit einer jeweils zum Filterelement 4 weisenden Ringstirnfläche auf. Mit einem Zapfenabschnitt tauchen die Haltezapfen 26, 28 jeweils durch das jeweilige Halteblech 22 bzw. 24 hindurch in den Innenraum 14 des Filterelements 4 ein und liegen mit ihren Ringstirnflächen am jeweiligen Halteblech 22 bzw. 24 an. Der in der Figur 1 untere Haltezapfen 28 ist dabei in eine Sacklochbohrung 30 eines Gehäusevorsprungs 32 des Filtergehäuses 2 formschlüssig eingetaucht. Der Gehäusevorsprung 32 erstreckt sich von einer Bodenfläche 34 des Filtergehäuses 2 etwa koaxial zur Filterlängsachse des Filterelements 4. Der in der Figur 1 obere Haltezapfen 26 ragt aus dem Filtergehäuse 2 heraus und ist dabei abschnittsweise in einem etwa konkaven Innenraum 36 des kuppelförmigen Kopfteils 6 angeordnet. In dem Kopfteil 6 sind ein oder mehrere Haltestege 38 ausgebildet, die sich etwa parallel zur Filterlängsachse erstrecken und sich an einer vom Filterelement 4 weg weisenden Stirnfläche 40 des Haltezapfens 26 abstützen, wodurch das Filterelement 4 über die Haltezapfen 26 und 28 fest zwischen dem Filtergehäuse 2 und dem Kopfteil 6 gehaltert ist. Das Kopfteil 6 ist dabei dichtend mit dem Filtergehäuse 2 verbunden.

Der Zulaufkanal 8 erstreckt sich in Filterlängsrichtung gesehen auf Höhe des Filterelements 4 in Richtung des Ringraums 20 etwa tangential zum Filterelement 4. Ein Endabschnitt 42 des Zulaufkanals 8 ist dabei nutförmig ausgebildet, wobei sich eine Nutlängsachse etwa in Richtung der Filterlängsachse erstreckt. Die nutförmige Ausgestaltung des Endabschnitts 42 führt in Längsrichtung gesehen zu einer Verbreiterung des Zulaufkanals 8. Der Endabschnitt 42 des Zulaufkanals 8 erstreckt sich dabei etwa von einem von dem in der Figur 1 unteren Halteblech 24 und der Bodenfläche 34 des Filtergehäuses begrenzten ringförmigen Filterraums 44 bis etwa unterhalb der halben Höhe des Filterelements 4. An dem Endabschnitt 42 schließt stromaufwärts ein kegelstumpfförmiger Kanalabschnitt 46 an, der sich in Richtung des Endabschnitts 42 hin verbreitert. Der Kanalabschnitt 46 des Zulaufkanals 8 endet an einer etwa parallel zur Filterlängsachse sich erstreckenden Flanschfläche 48 eines am Filtergehäuse 2 ausgebildeten Flansches 50. Der Kanalabschnitt 46 ist dabei mit einem Zulaufanschluss Z verbunden. Der Kanalabschnitt 46 ist etwa in Richtung der Filterlängsachse gesehen in der Figur 1 im unteren Drittel des Filterelements 4 im Filtergehäuse 2 ausgebildet.

Eine Tiefe des Endabschnitts 42 entspricht etwa einer Wanddicke des Filterelements 4. Ein unterer Flächenabschnitt 52 des Endabschnitts 42 erstreckt sich dabei vom Kanalabschnitt 46 bis etwa zur Bodenfläche 34, wobei ein Anstellwinkel des Flächenabschnitts 52 zur Filterlängsachse ungefähr 45° beträgt. Ein in der Figur 1 oberer Flächenabschnitt 54 des Endabschnitts 42 weist etwa den Neigungswinkel des kegelstumpfförmigen Kanalabschnitts 46 auf, wobei dieser etwa mit einem ungefähren Winkel von 80° zur Filterlängsachse ausgebildet ist.

Ein Endabschnitt 56 des Ablaufanschlusses 10 mündet etwa koaxial zur Filterlängsachse in der Bodenfläche 34 des Filtergehäuses 2 und ist über eine nicht dargestellte Bohrung im Gehäusevorsprung 32 und über eine Bohrung im Haltezapfen 28 mit dem Innenraum 14 des Filterelements 4 verbunden. Von diesem Endabschnitt 56 aus erstreckt sich der Ablaufkanal bogenförmig etwa einen Viertelkreis umlaufend zum Flansch 50. Der Ablaufkanal 10 mündet dann mit einem Kanalabschnitt 58, der entsprechend dem Kanalabschnitt 46 des Zulaufkanals 8 ausgebildet ist, in der Flanschfläche 48 und ist dort mit einem Ablaufanschluss A verbunden. Der Kanalabschnitt 58 ist in der Figur 1 unterhalb des Endabschnitts 56 angeordnet.

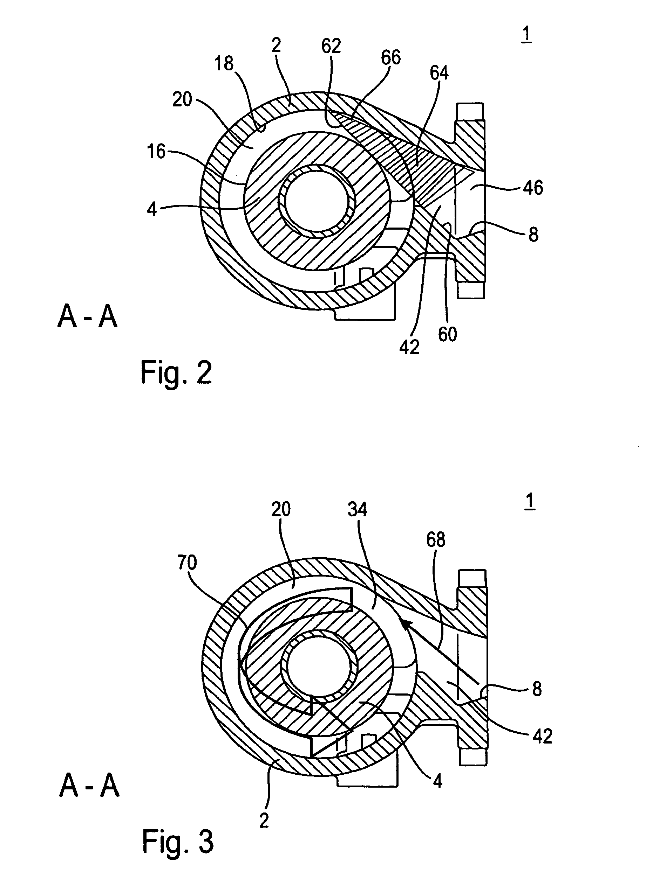

Figur 2 zeigt eine Querschnittsansicht des Filters 1 entlang der Schnittebene A - A aus Figur 1. Im Querschnitt etwa senkrecht zur Filterlängsachse gesehen erstreckt sich der Endabschnitt 42 des Zulaufkanals 8 hin zum Ringraum 20. Eine Längsachse des kegelstumpfförmigen Kanalabschnitts 46 des Zulaufkanals 8 erstreckt sich etwa radial und senkrecht zur Filterlängsachse vom Filterelement 4 weg. Ein in der Figur 2 unterer Flächenabschnitt 60 ist dabei etwa tangential zur Außenmantelfläche 16 des Filterelements 4 angeordnet, was durch den in der Figur 2 eingezeichneten geometrischen Dreiecksschenkel 62 verdeutlicht ist, der sich parallel zum Flächenabschnitt 60 erstreckt. Ein in der Figur 2 oberer Flächenabschnitt 64 des Endabschnitts 42 erstreckt sich dabei etwa tangential zur Innenmantelfläche 18 des Filtergehäuses 2, was durch den in der Figur 2 oberen etwa parallel zum Flächenabschnitt 64 verlaufenden Dreiecksschenkel 66 verdeutlicht ist. Der Schnittpunkt der Dreiecksschenkel 62 und 66 liegt etwa an der Innenmantelfläche 18 des Filtergehäuses 2.

Figur 3 zeigt in der Querschnittsansicht A - A einen Strömungsverlauf des Druckmittels. Dieses strömt, was durch einen Pfeil 68 gekennzeichnet ist, in Querschnittsrichtung gesehen etwa tangential zum Filterelement 4 in den Ringraum 20 ein. Durch den sich im Querschnitt verjüngenden und im Längsschnitt in der Figur 1 verbreiternden Endabschnitt 42 des Zulaufkanals 8 wird die Strömung nach unten, in die Zeichenebene in der Figur 3 hinein, umgelenkt, was durch den Pfeil 70 verdeutlicht ist. Die Bodenfläche 34 des Filtergehäuses 2 ist dabei rampenförmig ausgebildet. Dies ist in der Figur 1 erkennbar, wobei die Bodenfläche 34 im Bereich des Zulaufkanals 8 ihren tiefsten Punkt hat und dabei etwa einen Dreiviertelkreis umlaufend spiralförmig ansteigt. In der Figur 1 betrachtet strömt somit Druckmittel vom Zulaufkanal 8 tangential zum Filterelement 4 in Richtung der Bodenfläche 34 und wird über diese nach oben in Figur 2 umgelenkt, wobei das Druckmittel dann zyklonartig das Filterelement 4 umströmt und über dessen Außenmantelfläche 16 in den Innenraum 14 gelangt und von da aus über den Ablaufkanal 10 abströmt.

Alternativ zur Ausgestaltung des Zulaufkanals 8 in der Figur 1 ist denkbar, den nutartigen Endabschnitt 42 derart auszugestalten, dass Druckmittel beim Einströmen in den Ringraum 20 in der Figur 1 nach oben strömt oder nur tangential zum Filterelement 4 einströmt.

Offenbart ist ein Filter, insbesondere ein Hydraulikfilter, zum Filtern eines Mittels, insbesondere eines Fluids oder eines Druckmittels, der ein Filtergehäuse aufweist, in dem ein etwa hohlzylindrisches Filterelement eingesetzt ist. Das Filterelement begrenzt zusammen mit dem Filtergehäuse einen ringförmigen Strömungsraum, wobei ein Zulaufkanal zumindest abschnittsweise tangential zum Filterelement in den Strömungsraum mündet und sich ein Ablaufkanal von einem Innenbereich des Filterelements aus weg erstreckt.

### Bezugszeichenliste

- 1: Filter
- 2: Filtergehäuse
- 4: Filterelement
- 6: Kopfteil
- 8: Zulaufkanal
- 10: Ablaufkanal
- 12: Innenmantelfläche
- 14: Innenraum
- 16: Außenmantelfläche
- 18: Innenmantelfläche
- 20: Ringraum
- 22: Halteblech
- 24: Halteblech
- 26: Haltezapfen
- 28: Haltezapfen
- 30: Sacklochbohrung
- 32: Gehäusevorsprung
- 34: Bodenfläche
- 36: Innenraum
- 38: Haltesteg
- 40: Stirnfläche
- 42: Endabschnitt
- 44: Filterraum
- 46: Kanalabschnitt
- 48: Flanschfläche
- 50: Flansch
- 52: Flächenabschnitt
- 54: Flächenabschnitt
- 56: Endabschnitt
- 58: Kanalabschnitt
- 60: Flächenabschnitt
- 62: Dreiecksschenkel
- 64: Flächenabschnitt
- 66: Dreiecksschenkel
- 68: Pfeil
- 70: Pfeil
- Z: Zulaufanschluss
- A: Ablaufanschluss

## Patentansprüche

1. Filter, insbesondere ein Hydraulikfilter, zum Abscheiden von Partikeln aus einem Mittel, insbesondere aus einem Fluid oder einem Druckmittel, mit einem Filtergehäuse (2), in dem ein etwa zylindrisches Filterelement (4) angeordnet ist, wobei ein Ringraum (20) von einer Außenmantelfläche (16) des Filterelements (4) und einer Innenmantelfläche (12) des Filtergehäuses (2) begrenzt ist, wobei ein Zulaufkanal (8) in den Ringraum (20) mündet und sich ein Ablaufkanal (10) von einem Innenbereich (14) des Filterelements (4) aus erstreckt, wobei der Zulaufkanal (8) etwa in einer Umfangsrichtung des Ringraums (20) in diesen mündet, **dadurch gekennzeichnet, dass** der Zulaufkanal (8) im Querschnitt senkrecht zur Filterlängsachse einen sich zum Ringraum (20) hin verjüngenden Endabschnitt (42) aufweist, und wobei der Endabschnitt (42) des Zulaufkanals (8) im Längsschnitt parallel zur Filterlängsachse verbreitert ist, wobei der verbreitete Endabschnitt (56) des Zulaufkanals derart ausgestaltet ist, dass das zu filternde Mittel zum Ausbilden einer zyklonartigen Strömung des Mittels in eine axiale Richtung des Filterelements (4) gelenkt ist, wobei der Zulauf- und Ablaufkanal (8, 10) einstückig mit dem Filtergehäuse (2) ausgebildet sind.

2. Filter nach Anspruch 1, wobei der Ringraum (20) eine etwa kreisringförmige Querschnittsfläche aufweist und der Zulaufkanal (8) etwa tangential zur Außenmantelfläche (16) des Filterelements (4) angeordnet ist.

3. Filter nach Anspruch 1 oder 2, wobei das Filtergehäuse (2) topfartig ausgebildet ist und das Filterelement (4) vollständig in diesem eingetaucht ist.

4. Filter nach einem der vorhergehenden Ansprüche, wobei das Filtergehäuse (2) einen Gehäuseflansch (50) aufweist, mit einem mit dem Zulaufkanal (8) verbundenen Zulaufanschluss (Z) und mit einem mit dem Ablaufkanal (10) verbundenen Ablaufanschluss (A).

5. Filter nach Anspruch 4, wobei der Zulaufanschluss (Z) in Filterlängsrichtung gesehen zumindest abschnittsweise auf Höhe des Filterelements (4) ausgebildet ist.

6. Filter nach einem der Ansprüche 4 oder 5, wobei sich der Ablaufkanal (10) etwa koaxial zum Filterelement (4) von einem Bodenbereich (34) des Filtergehäuses (2) aus etwa bogenförmig zum Gehäuseflansch (50) erstreckt.

## Claims

1. Filter, in particular a hydraulic filter, for separating particles from a medium, in particular from a fluid or a pressure medium, having a filter housing (2), in which an approximately cylindrical filter element (4) is arranged, an annular space (20) being delimited by an outer circumferential face (16) of the filter element (4) and an inner circumferential face (12) of the filter housing (2), an inflow channel (8) opening into the annular space (20) and an outflow channel (10) extending from an inner region (14) of the filter element (4), the inflow channel (8) opening into the annular space (20) approximately in a circumferential direction of the latter, **characterized in that**, in cross section perpendicularly with respect to the filter longitudinal axis, the inflow channel (8) has an end section (42) which tapers towards the annular space (20), and the end section (42) of the inflow channel (8) being widened in longitudinal section parallel to the filter longitudinal axis, the widened end section (56) of the inflow channel being configured in such a way that the medium to be filtered is diverted in an axial direction of the filter element (4) in order to form a cyclone-like flow of the medium, the inflow and outflow channel (8, 10) being configured in one piece with the filter housing (2).

2. Filter according to Claim 1, the annular space (20) having an approximately circularly annular cross-sectional area and the inflow channel (8) being arranged approximately tangentially with respect to the outer circumferential face (16) of the filter element (4).

3. Filter according to Claim 1 or 2, the filter housing (2) being of pot-like configuration and the filter element (4) being inserted completely in the said filter housing (2).

4. Filter according to one of the preceding claims, the filter housing (2) having a housing flange (50), having an inflow connector (Z) which is connected to the inflow channel (8) and having an outflow connector (A) which is connected to the outflow channel (10).

5. Filter according to Claim 4, the inflow connector (Z) being configured at least in sections at the level of the filter element (4), as viewed in the filter longitudinal direction.

6. Filter according to either of Claims 4 and 5, the outflow channel (10) extending approximately coaxially with respect to the filter element (4), approximately arcuately from a bottom region (34) of the filter housing (2) to the housing flange (50).

## Revendications

1. Filtre, en particulier filtre hydraulique, pour la séparation de particules d'un milieu, en particulier d'un fluide ou d'un milieu sous pression, comprenant un boîtier de filtre (2), dans lequel est disposé un élément de filtre approximativement cylindrique (4), un espace annulaire (20) étant limité par une surface d'enveloppe extérieure (16) de l'élément de filtre (4) et une surface d'enveloppe intérieure (12) du boîtier de filtre (2), un canal d'alimentation (8) débouchant dans l'espace annulaire (20) et un canal d'écoulement (10) s'étendant depuis une région intérieure (14) de l'élément de filtre (4), le canal d'alimentation (8) débouchant approximativement dans une direction périphérique de l'espace annulaire (20) dans ce dernier, **caractérisé en ce que** le canal d'alimentation (8) présente, en section transversale perpendiculairement à l'axe longitudinal du filtre, une portion d'extrémité (42) se rétrécissant vers l'espace annulaire (20), et la portion d'extrémité (42) du canal d'alimentation (8) étant élargie en coupe longitudinale parallèlement à l'axe longitudinal du filtre, la portion d'extrémité élargie (56) du canal d'alimentation étant configurée de telle sorte que le milieu à filtrer soit guidé dans une direction axiale de l'élément de filtre (4) afin de réaliser un écoulement de type cyclone du milieu, le canal d'alimentation et le canal d'écoulement (8, 10) étant réalisés d'une seule pièce avec le boîtier de filtre (2).

2. Filtre selon la revendication 1, dans lequel l'espace annulaire (20) présente une surface en section transversale approximativement annulaire circulaire et le canal d'alimentation (8) est disposé approximativement tangentiellement à la surface d'enveloppe extérieure (16) de l'élément de filtre (4).

3. Filtre selon la revendication 1 ou 2, dans lequel le boîtier de filtre (2) est réalisé en forme de pot et l'élément de filtre (4) est complètement enfoncé dans celui-ci.

4. Filtre selon l'une quelconque des revendications précédentes, dans lequel le boîtier de filtre (2) présente une bride de boîtier (50) avec un raccord d'alimentation (Z) raccordé au canal d'alimentation (8) et un raccord d'écoulement (A) raccordé au canal d'écoulement (10).

5. Filtre selon la revendication 4, dans lequel le raccord d'alimentation (Z), vu dans la direction longitudinale du filtre, est réalisé au moins en partie à la hauteur de l'élément de filtre (4).

6. Filtre selon l'une quelconque des revendications 4 ou 5, dans lequel le canal d'écoulement (10) s'étend approximativement coaxialement par rapport à l'élément de filtre (4) depuis une région de fond (34) du boîtier de filtre (2) approximativement sous forme courbe jusqu'à la bride de boîtier (50).
